(19) Europäisches Patentamt

European Patent Office

Office européen des brevets

(11) **EP 2 425 890 B1**

(12) **EUROPEAN PATENT SPECIFICATION**

(45) Date of publication and mention
of the grant of the patent:
**04.09.2013 Bulletin 2013/36**

(51) Int Cl.:
*B01F 3/04* (2006.01) *B01F 3/08* (2006.01)
*B01F 5/04* (2006.01)

(21) Application number: **11180104.9**

(22) Date of filing: **05.09.2011**

(54) **Flow Conditioning Apparatus**

Durchflusskonditionierungsvorrichtung

Appareil de conditionnement de flux

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.09.2010 GB 201014765**

(43) Date of publication of application:
**07.03.2012 Bulletin 2012/10**

(73) Proprietor: **FRAMO ENGINEERING AS
5862 Bergen (NO)**

(72) Inventor: **Torkildsen, Bernt Helge
5221 Nesttun (NO)**

(74) Representative: **Freeman, Jacqueline Carol
WP Thompson
55 Drury Lane
London WC2B 5SQ (GB)**

(56) References cited:
**EP-A2- 0 379 319     WO-A1-2008/061972
DE-A1- 4 224 911**

**Description**

<u>FIELD OF THE INVENTION</u>

The invention relates to flow conditioning apparatus and particularly to such apparatus when used in the field of hydrocarbon (oil and gas) exploration and production. It has particular application in the homogenization or mixing of fluids, particularly multi-phase fluids.

<u>BACKGROUND OF THE INVENTION</u>

Multi-phase fluids comprise both gas and liquid components and an example would be a well stream extracted from an onshore or subsea well which comprises a mixture of gas and oil. Such a mixture can vary substantially as regards its gas and liquid components. It may comprise slugs of substantially unmixed liquid separated by primarily gaseous portions, as well as portions that are more or less homogeneous. This inconsistency of the nature of the extracted material makes it difficult to handle, in particular by pumping equipment, which can more efficiently and reliably deal with a homogeneous mixture.

Apparatus for homogenizing multi-phase fluids is known from EP-A-0379319 and WO 90/13859 in which a multi-phase fluid is supplied to a reservoir in which it tends to separate into a body of predominantly gaseous phase fluid adjacent to a pool of predominantly liquid phase fluid. The liquid phase flows out of the reservoir via an outlet conduit and a pipe channels gaseous phase fluid through the liquid phase to the outlet. A venturi restriction in the outlet conduit creates suction to draw the gaseous phase into the liquid phase flow at the outlet. Perforations along the length of the pipe draw liquid phase into the gaseous phase and aid the homogenization process.

Another multi-phase fluid homogenizing apparatus end method is described in WO 2008/06 1972.

A problem with these known multi-phase fluid homogenizers occurs when the unprocessed well stream contains sand particles or other solids. The apparatus must then be designed with large flow areas to avoid solids accumulating in narrow sections and blocking the flow or clogging the apparatus. Such accumulation seriously reduces the efficiency of the known apparatus and can prevent it working altogether.

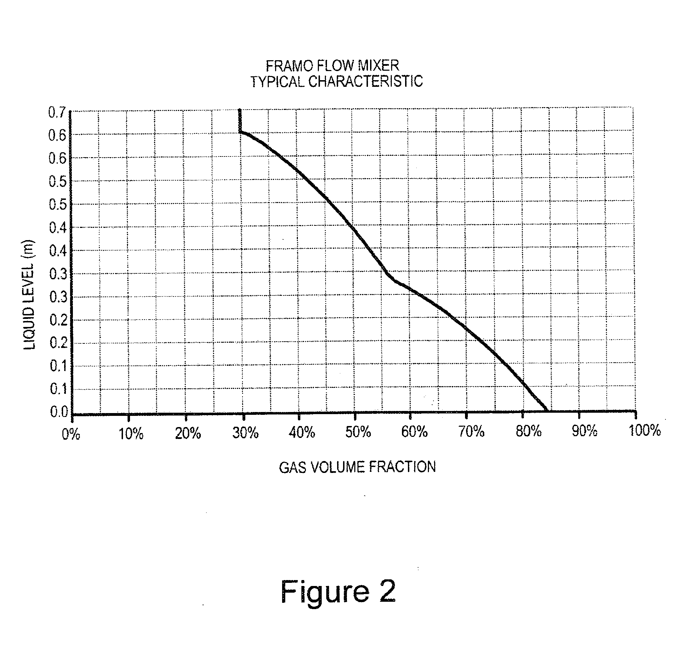

In these known homogenizers, the relative proportions of gas to liquid in the mixture, i.e. the gas volume fraction (GVF) is directly correlated to the level of the liquid in the reservoir, in that the higher the GVF, the lower the liquid level. This relationship determines the optimum operating envelope of the apparatus. The apparatus can be adapted by choosing appropriate flow areas for respective liquid and gas streams in the outlet, combined with appropriate numbers and sizes of perforations in the pipe. For high GVF applications the liquid outflow rate, and hence the cross-sectional area of the outlet conduit, needs to be small and the perforations in the pipe reduced in size or number or both. However if the liquid flow area is made too small it becomes more prone to blockage from solids. Thus there is a practical limit, dependent upon the size and amount of the solid particles in the flow, below which the liquid flow area cannot be reduced without seriously prejudicing the performance of the apparatus. A typical lower limit in gas and oil applications for a liquid flow clearance is about 5 mm and this equates, using a perforated pipe of around 5 - 30 cm diameter, to a maximum GVF of 90 - 98% corresponding to a maximum GLR of 10 - 50. As a result, it is generally difficult to design the known homogenizing apparatus for optimum operation of GLR above 10 - 50. This is illustrated in Figure 2.

Multi-phase mixtures with a very high gas volume fraction (GVF) are known as condensate or "Wet Gas" - a geological term for a gaseous mixture of hydrocarbons that contain a significant amount of compounds with molecular weights heavier than methane. Such wet gas fluids typically have a GVF of above approximately 95% corresponding to a gas liquid ratio (GLR) above 20. Typically such fluids also contain other non-hydrocarbon compounds such as carbon dioxide, hydrogen sulphide, nitrogen, oxygen and water.

It would be advantageous to provide apparatus which can efficiently handle high GVF multi-fluid flows, such as Wet Gas flows, without being prone to blockage from solid particles in the flow.

<u>SUMMARY OF THE INVENTION</u>

According to one aspect of the present invention there is provided apparatus for homogenization of multi-phase fluid; the fluid comprising at least a first phase and a second phase a gaseous phase and a liquid phase; the apparatus comprising an inner reservoir fluidly communicative with an outer receptacle; the inner reservoir comprising an inlet for multiphase fluid, an outlet having a smaller cross sectional area than the body for outflow of the first phase and at least one opening into the outer receptacle for outflow of the second phase, the opening being spaced from the first phase outlet; wherein the outer receptacle has an outlet conduit having a neck which at least partially surrounds the inner reservoir outlet.

According to a second aspect of the present invention there is provided a method for homogenizing multi-phase fluid comprising: supplying a multi-phase fluid through an inlet to an inner reservoir which is at least partially surrounded by an outer receptacle; allowing phases of the multi-phase fluid to a least partly separate in the inner reservoir; and drawing off an outlet stream of fluid from the inner reservoir through an outlet comprising a venturi so that fluid is drawn through the outer receptacle into the outlet stream.

The gas component can be drawn from the gas body through one or more apertures in the roof of the reservoir which communicates with the outer receptacle which may at least partially surround the inner reservoir. An internal partition may also be incorporated.

Some of the liquid may also be arranged to flow together with the gas from the reservoir into the outer receptacle to the venturi. The amount or proportion of the gas component which is drawn off from the gas body is inversely proportional to the liquid level and thus decreases as a function of an increase of the liquid level, as more of the perforations are submerged. This serves as an automatic regulation of the gas volume fraction.

The invention is further described below, by way of example, with reference to the accompanying drawings, in which:

Figure 1 is a schematic sectional view of one embodiment of a mixing homogenizing apparatus according to the invention;

Figure 2 graphically illustrates a typical relationship between the liquid level in the apparatus of the prior art and the gas volume fraction (GVF) in the fluid output;

Figure 3 graphically illustrates the advantage of this invention over the prior art; and

Figure 4 is a schematic sectional view of a second embodiment of apparatus according to the invention.

## DETAILED DESCRIPTION OF THE DRAWINGS

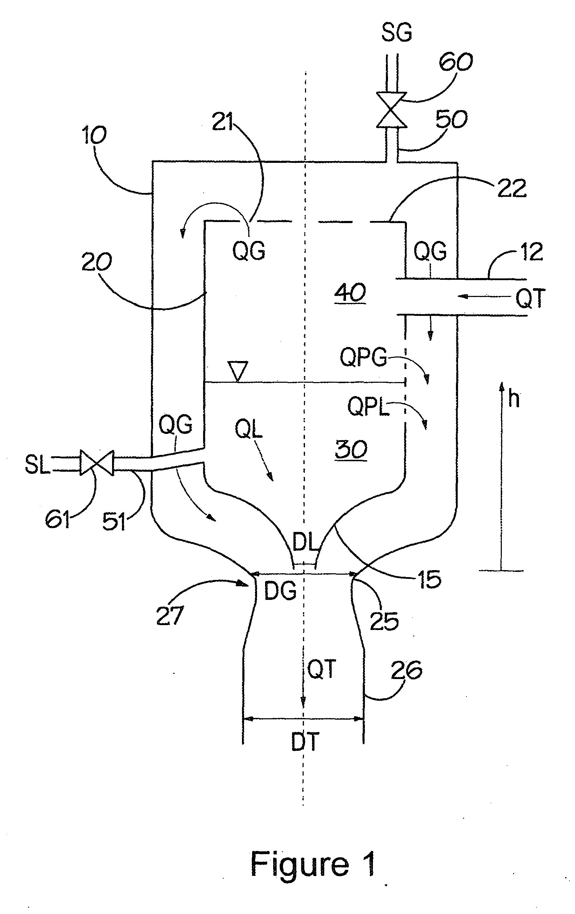

The apparatus of Figure 1 comprises a outer container 10 of generally upright cylindrical form of which the interior is closed, except for the fluid inlets and the outlets to be described. An inner vessel 20 is located within the container 10 and (in the illustrated embodiment) is coaxial with it.

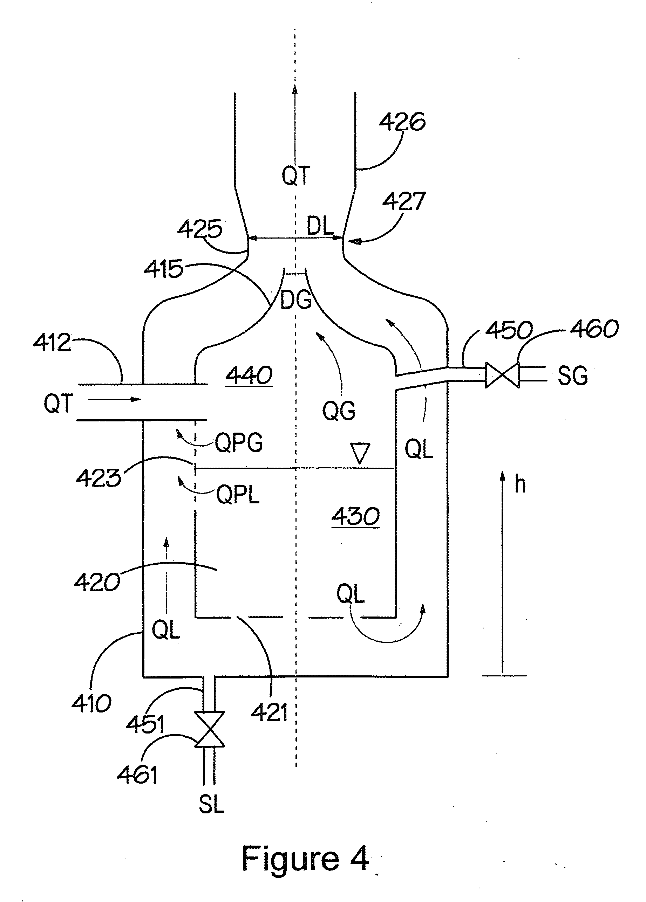

At the upper region of the cylindrical side wall of the container 10 and vessel 20, there is a radial inlet port 12 bringing multi-phase fluid at a total flow rate QT (gas & liquid) from a source (not shown) into the interior of the inner vessel 20. The inlet port 12 may alternatively be axial. Inside the vessel 20 the fluid tends to separate into different phases with liquid collecting in a pool 30 which has a depth h, and gas collecting in a body 40 adjacent to and above the liquid pool 30. In this configuration with a cylindrical shaped inner vessel (20) and a radial or axial inlet the separation is caused by gravity. An alternative configuration has a conical shaped inner vessel (20) and a tangential inlet and in that case separation is aided by centrifugal forces creating a cyclonic separation effect in addition to gravity. For both configurations a vertical downward flow through the vessel is the normal orientation with the outlet located at the lower end. However an "upside-down" orientation with the outlet at the upper end is also possible as shown in Figure 4 and described later.

A plurality of gas outlet ports 21 in the roof 22 of the vessel 20 communicate with the outer container 10 and allow the flow of gas from the gas body 40 in the vessel 20 into the upper part of the container 10 at a flow rate QG. Gas and liquid also flow out into the container 10 through perforations 23 in the side of the inner vessel 20 at respective flow rates QPG and QPL.

The homogenizer comprises a fluid ejector 27 where liquid and gas are mixed. This comprises a liquid outlet port 15 located centrally in the base of the inner vessel 20 and a neck 25 of an outlet conduit 26 from the container 10. The neck 25 is normally located slightly downstream of the liquid outlet port 15 but this is not essential. The liquid outlet port 15 has a diameter DL discharging liquid L at a flow rate QL, into the gas flow QG in the neck 25. The neck 25 is pinched so that it has a diameter DG, at its narrowest, which is smaller than the diameter DT of the downstream outlet conduit 26.

The preferred ratio DG/DL depends on the application and is chosen to obtain a suitable flow mixer characteristic as explained in more detail in relation to Figure 2.

One example of typical dimensions for the ejector 27 would be that the diameter DG of the neck portion 25 is 150 mm while the diameter of the liquid outlet port 15 is 10 mm so the ratio DG/DL is 15. In general, for oil and gas production applications the diameter DG would be between 20 - 300 mm and the diameter DL between 5 mm and (DG - 10) mm which gives a ratio DG/DL of between 1.03 and 60. Typically a DG/DL ratio of above 2.5 is most appropriate for wet gas (high GVF) applications.

Since the neck 25 of the outlet conduit 26 is narrower than the outlet conduit 26 a venturi effect is created in the ejector 27 where the gas and liquid meet. This causes a higher fluid flow and reduced pressure which forms a turbulent shear layer in the venturi extending downstream and providing an effective means of phase mixing of gas and liquid to form a homogenized multi-phase fluid flowing out of the outlet conduit 26 at a flow rate QT.

Different downstream devices such as a multiphase pump or a multiphase flow meter benefit from the mixing process because a well mixed flow is normally required in order to achieve optimum performance of multiphase devices. For example, even a pipe arrangement for splitting a multiphase stream in two or more equal streams is very unlikely to work properly unless the upstream flow is well mixed.

If the multi-phase fluid entering the apparatus is already homogenous or approximately so, then the fluid mixture will be discharged through the outlet conduit 26 by way of both the inner vessel outlet port 15 and the outer container outlet 26.

The production flow is driven by a reservoir pressure higher than a downstream pressure.

The objective of the sampling ports are to collect respectively liquid rich and gas rich fluid samples. The fluid samples are sampled carefully into a sampling bottle maintaining the process pressure and temperature. Normally the sampling operation will be carried out by use of an ROV (Remotely Operated Vessel) and the bottles (one with the liquid rich fluid and one with the gas rich fluid) will be brought to the surface and further to a laboratory where the fluids are analysed for their constituents and properties, particularly the water-oil ratio or water cut of the liquid phase.

This is particular useful when several well streams are combined subsea and routed to topside via a single pipeline. A topside sample will then only be representative for total combined flow and not be able to provide information from the individual well fluids. A subsea sampling unit located upstream the manifold will on the contrary be able to provide representative fluid samples from individual wells.

In combination with multiphase flow meters it might be particular useful to obtain the salt content of the water but also other fluid constituents such as sulphur etc. which influence the calibration coefficients of the flow meter.

Accurate multiphase flow measurements depends on a very precise description of the respective oil, water and gas phase properties. Normally phase densities, mass attenuation and/or electrical properties of the individual phases are required, and these properties will be influenced by different constituents such as the salt content of the water and sulphur content of the oil. Wet gas measurements will in particular also be sensitive to the gas properties.

As a supplement or in some cases alternative to a multiphase flow meter a subsea sampling device can be used to detect water break through and obtain the water cut particular at wet gas conditions where accurate measures are difficult to obtain from multiphase flow meters.

In some cases subsea sampling might be used stand-alone to detect chemical tracers identifying active production zones or simply to obtain fluid properties (other than flow rates) to better describe the reservoir and its fluid.

A subsea sampling process involves a lot of equipment, resources and cost. Due to the chaotic and non-predictability of a multiphase stream the risk of failing to obtain a representative sample of the different fluid phases has normally been high due to the lack of adequate sampling devices.

A sampling outlet 50 controlled by valve 60 is provided for sampling the gas rich stream SG of fluid in the outer container. For sampling the liquid rich stream SL in the pool 30 inside the vessel 20, a sampling outlet 51 is provided controlled by valve 61. Sampling the respective phases of the fluid in this way allows the process to be closely monitored and enables better and more accurate control. For example, flow can be adjusted for optimum performance for particular conditions.

Figure 4 shows another embodiment of the invention in which the apparatus is essentially "upside-down". Equivalent features are prefaced with "4" for ease of reference.

Thus outer container 410 has an inner vessel 420, inlet port 412 for the multiphase fluid and fluid ejector 427 where the liquid and gas phases are mixed. The multiphase fluid separates into different phases, as in the first embodiment of the Figure 1, with liquid collecting in a pool 430 to a depth h, and gas in a body 440 above the liquid pool 430. In this embodiment outlet ports 421 are in the base of vessel 420 and allow liquid to flow from the pool 430 into the container 410 at a flow rate QL. Perforations 423 in the side of the inner vessel 420 allows gas and liquid to flow out of the inner vessel 420.

The ejector 427 comprises inner outlet port 415 into the neck 425 of the container 410. It will be seen that the gas and liquid streams are essentially reversed in this embodiment in that gas flows predominantly from the inner vessel 420 through the inner outlet port 415 whereas liquid flows out of ports 421 and perforations 423 and through the ejector 427 via the neck 425.

Liquid sampling outlet 451 controlled by valve 461 exits from the outer container 410 in this embodiment and gas sampling outlet 450 controlled by valve 460 exits from the inner vessel 420.

The present invention has the effect of enabling a homogenizer to be designed for a relatively high gas volume fraction (GVF) by designing the unit with a small liquid to gas area ratio in the outlet without compromising the requirements for a minimum clearance in the liquid stream path to avoid blockage by particles.

For the purpose of demonstrating the added benefit of the present invention compared to known homogenizers, the relative amount of the volumetric gas flow rate will be expressed through the Gas Liquid Ratio (GLR) instead of the Gas Volume Fractions (GVF). The two terms are however related as described by the equation below. In the following it should be noted that the diameters DG and DL are taken in the same plane.

Equation 1

$$GLR = \frac{GVF}{1 - GVF}$$

For the prior art homogenizer described in EP 0 379 319, without perforations, the following relation for the outlet GVF has been derived:

Equation 2

$$GVF = \frac{L \cdot \rho_L - \sqrt{L \cdot \rho_L \cdot G \cdot \rho_G + F \cdot (L \cdot \rho_L - G \cdot \rho_G)}}{L \cdot \rho_L - G \cdot \rho_G}$$

Where L and G are geometric parameters, F is a flow parameter and $\rho_L$ and $\rho_G$ are the liquid and gas phase densities respectively. The flow parameter F is expressed as:

Equation 3

$$F = \frac{2 \cdot g \cdot h}{Q_T^2} \cdot (\rho_L - \rho_G)$$

By introducing the liquid to gas area ratio $A_R$ in the ejector 27 defined as:

Equation 4

$$A_R = \left(\frac{A_L}{A_G}\right)$$

where $A_L$ and $A_G$ are the respective liquid and gas flow areas in the ejector and making a few minor assumptions such as neglecting frictional losses it is possible to a derive an approximate expression for the outlet GVF or outlet GLR for a homogenizer without perforations as follows:

Equation 5

$$GLR = \frac{U_G}{A_R \cdot \sqrt{2 \cdot g \cdot h}}$$

The effect of the perforations 23 is not described here as any perforations will tend to reduce the outlet GLR while the present invention aims to increase the outlet GLR. However the function of any perforations will be similar for the present invention as it is for the known homogenizers.

The relation for the outlet GLR as expressed by equation 5 is valid both for the present invention as well as for the known homogenizer. However the liquid to gas area ratio will be expressed differently as described below.

In known mixers, assuming that the wall of the central vessel 20 is relatively thin, and for high GLR applications the annulus clearance is small, then the hydraulic mean diameter of the annulus in the ejector 27 is close to the internal diameter of the central vessel 20, thus:

Equation 6

$$A_R \approx \frac{4 \cdot C}{DG}$$

For the present invention the diameter of the liquid flow area DL in the ejector 27 will be named clearance (C), in order to show the relationship with the known homogenizer. Further, assuming that for high GLR applications the DL or C will be much smaller than the diameter of the gas flow area such that the area occupied by the liquid can be neglected when the gas flow area is calculated, thus:

Equation 7

$$A_R \approx \frac{C^2}{DG^2}$$

Comparing the liquid to gas area ratio $A_R$ of the present invention to that of the prior art we can write:

Equation 8

$$\frac{GLR_{present\ invention}}{GLR_{prior\ art}} \approx \frac{4 \cdot DG}{C}$$

From equation 8 it will be observed that for typical dimensions the outlet GLR of the present invention can be increased in the order of up to 100 times compared with that of the known homogenizers.

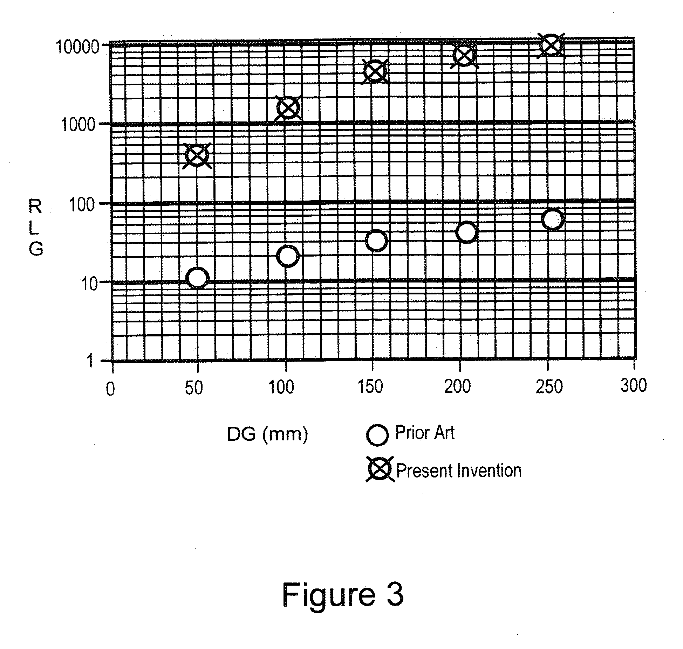

The typical maximum outlet GLR that can be obtained with the present invention and compared with the prior art is shown in Figure 3, assuming a liquid level of 0.5 m and a gas velocity of 12 m/s. For higher liquid levels the negative gradient of the characteristic curve can be reduced by introducing perforations if required to increase the GLR range of the apparatus.

It will be readily appreciated that the invention can be embodied in a variety of ways other than as specifically described and illustrated.

**Claims**

1. Apparatus for homogenization of multi-phase fluid;
   the fluid comprising at least a first phase and a second phase comprising a gaseous phase and a liquid phase;
   the apparatus comprising an inner reservoir (20) fluidly communicative with an outer receptacle (10);
   the inner reservoir (20) comprising an inlet (12) for the multiphase fluid, an outlet (15) having a smaller cross sectional area than the body for outflow of the first phase and at least one opening (21) into the outer receptacle for outflow of the second phase, the opening being spaced from the first phase outlet;
   wherein the outer receptacle (10) has an outlet conduit (26) having a neck (25) which at least partially surrounds the inner reservoir outlet (15).

2. Apparatus according to claim 1 wherein the inner reservoir (20) comprises a conical shaped vessel (20).

3. Apparatus according to claim 1 or 2 wherein the outlet (15) and the conduit (26) are at the bottom of the apparatus in use, and wherein the first phase is a liquid phase and the second phase is a gaseous phase.

4. Apparatus according to claim 1 or 2 wherein the outlet (15) and the conduit (26) are at the top of the apparatus in use, and wherein the first phase is a gaseous phase and the second phase is a liquid phase.

5. Apparatus according to claim 2, 3 or 4 wherein the multi-phase fluid inlet (12) in the inner reservoir (20) is orientated radially with respect to the conical shaped vessel (20).

6. Apparatus according to any one of the preceding claims wherein the multi-phase fluid inlet (12) is spaced from the inner reservoir outlet (15).

7. Apparatus according to any one of the preceding claims wherein the ratio of the diameter (DG) of the neck (25) to the diameter (DL) of the inner reservoir outlet (15) is above 2.5.

8. Apparatus according to claim 7 wherein the ratio (DG/DL) is between 5 and 60.

9. Apparatus according to claim 8 wherein the ratio (DG/DL) is between 10 and 30.

10. Apparatus according to claim 9 wherein the ratio (DG/DL) is about 15.

11. Apparatus according to any preceding claim wherein the inner reservoir (20) comprises a plurality of openings (21, 23) for fluid to pass from the inner reservoir (20) into the outer receptacle (10).

**12.** Apparatus according to claim 11 wherein at least one opening (21) is at an end of the inner reservoir (20) opposite to the inner reservoir outlet (15).

**13.** Apparatus according to claim 11 or 12 wherein at least one opening (23) is in the side of the inner reservoir (20) between the ends of the inner reservoir (20).

**14.** Apparatus according to claim 13 comprising a plurality of openings (23) in the side of the inner reservoir (20).

**15.** Apparatus according to any one of the preceding claims wherein the neck comprises a venturi (25) in the outlet (27).

**16.** Apparatus according to any one of the preceding claims comprising means to sample fluid in the outer receptacle (10).

**17.** Apparatus according to any one of the preceding claims comprising means to sample fluid in the inner reservoir (20).

**18.** A method for homogenizing multi-phase fluid comprising:

supplying a multi-phase fluid through an inlet (12) to an inner reservoir (20) which is at least partially surrounded by an outer receptacle (10);
allowing phases of the multi-phase fluid to a least partly separate in the inner reservoir (20); and
drawing off an outlet stream of fluid from the inner reservoir (20) through an outlet (15) comprising a venturi so that fluid is drawn through the outer receptacle into the outlet stream.

**19.** A method according to claim 18 wherein the inner reservoir (20) comprises a conical shaped vessel and the multi-phase fluid is supplied through the inlet (12) radially orientated with respect to the reservoir (20).

**20.** A method according to claim 18 or 19 wherein the ratio of the outer receptacle outlet (27) to the outlet (15) of the inner reservoir (20) is arranged to be between 10 and 30.

**21.** A method according to claim 18, 19 or 20 comprising sampling fluid in the outer receptacle.

**22.** A method according to claim 18, 19, 20 or 21 comprising sampling fluid in the inner reservoir (20).

**Patentansprüche**

**1.** Vorrichtung für die Homogenisierung eines mehrphasigen Fluids;
wobei das Fluid wenigstens eine erste Phase und eine zweite Phase, die eine gasförmige Phase und eine flüssige Phase umfassen, enthält;
wobei die Vorrichtung einen inneren Vorratsbehälter (20) aufweist, der mit einem äußeren Aufnahmebehälter (10) fluidtechnisch kommuniziert;
wobei der innere Vorratsbehälter (20) einen Einlass (12) für das mehrphasige Fluid, einen Auslass (15) mit einer kleineren Querschnittsfläche als der Körper für den Ausfluss der ersten Phase und wenigstens eine Öffnung (21) in den äußeren Aufnahmebehälter für den Ausfluss der zweiten Phase aufweist, wobei die Öffnung von dem Auslass der ersten Phase beabstandet ist;
wobei der äußere Aufnahmebehälter (10) eine Auslassleitung (26) mit einem Hals (25) besitzt, der den Auslass (15) des inneren Vorratsbehälters wenigstens teilweise umgibt.

**2.** Vorrichtung nach Anspruch 1, wobei der innere Vorratsbehälter (20) ein konisch geformtes Gefäß (20) umfasst.

**3.** Vorrichtung nach Anspruch 1 oder 2, wobei sich der Auslass (15) und die Leitung (26) im Gebrauch auf dem Boden der Vorrichtung befinden und wobei die erste Phase eine flüssige Phase ist und die zweite Phase eine gasförmige Phase ist.

**4.** Vorrichtung nach Anspruch 1 oder 2, wobei sich der Auslass (15) und die Leitung (26) im Gebrauch an der Oberseite der Vorrichtung befinden und wobei die erste Phase eine gasförmige Phase ist und die zweite Phase eine flüssige Phase ist.

**5.** Vorrichtung nach Anspruch 2, 3 oder 4, wobei der Einlass (12) des mehrphasigen Fluids in den inneren Vorratsbehälter (20) in Bezug auf das konisch geformte Gefäß (20) radial orientiert ist.

6. Vorrichtung nach einem der vorhergehenden Ansprüche, wobei der Einlass (12) des mehrphasigen Fluids von dem Auslass (15) des inneren Vorratsbehälters beabstandet ist.

7. Vorrichtung nach einem der vorhergehenden Ansprüche, wobei das Verhältnis des Durchmessers (DG) des Halses (25) zu dem Durchmesser (DL) des Auslasses (15) des inneren Vorratsbehälters größer als 2,5 ist.

8. Vorrichtung nach Anspruch 7, wobei das Verhältnis (DG/DL) im Bereich von 5 bis 60 liegt.

9. Vorrichtung nach Anspruch 8, wobei das Verhältnis (DG/DL) im Bereich von 10 bis 30 liegt.

10. Vorrichtung nach Anspruch 9, wobei das Verhältnis (DG/DL) etwa 15 beträgt.

11. Vorrichtung nach einem vorhergehenden Anspruch, wobei der innere Vorratsbehälter (20) mehrere Öffnungen (21, 23) umfasst, durch die sich Fluid von dem inneren Vorratsbehälter (20) in den äußeren Aufnahmebehälter (10) bewegen kann.

12. Vorrichtung nach Anspruch 11, wobei wenigstens eine Öffnung (21) an einem Ende des inneren Vorratsbehälters (20) gegenüber dem Auslass (15) des inneren Vorratsbehälters vorhanden ist.

13. Vorrichtung nach Anspruch 11 oder 12, wobei sich in der Seite des inneren Vorratsbehälters (20) zwischen den Enden des inneren Vorratsbehälters (20) wenigstens eine Öffnung (23) befindet.

14. Vorrichtung nach Anspruch 13, die mehrere Öffnungen (23) in der Seite des inneren Vorratsbehälters (20) aufweist.

15. Vorrichtung nach einem der vorhergehenden Ansprüche, wobei der Hals ein Venturi-Rohr (25) im Auslass (27) umfasst.

16. Vorrichtung nach einem der vorhergehenden Ansprüche, die Mittel umfasst, um Fluid im äußeren Aufnahmebehälter (10) abzutasten.

17. Vorrichtung nach einem der vorhergehenden Ansprüche, die Mittel umfasst, um Fluid im inneren Vorratsbehälter (20) abzutasten.

18. Verfahren zum Homogenisieren eines mehrphasigen Fluids, das umfasst:

Zuführen eines mehrphasigen Fluids durch einen Einlass (12) in einen inneren Vorratsbehälter (20), der wenigstens teilweise von einem äußeren Aufnahmebehälter (10) umgeben ist;
Zulassen, dass sich Phasen des mehrphasigen Fluids in dem inneren Vorratsbehälter (20) wenigstens teilweise trennen; und
Absaugen eines Auslassstroms von Fluid aus dem inneren Vorratsbehälter (20) durch einen Auslass (15), der ein Venturi-Rohr enthält, so dass Fluid durch den äußeren Aufnahmebehälter in den Auslassstrom gesaugt wird.

19. Verfahren nach Anspruch 18, wobei der innere Vorratsbehälter (20) ein konisch geformtes Gefäß aufweist und das mehrphasige Fluid durch den Einlass (12), der in Bezug auf den Vorratsbehälter (20) radial orientiert ist, zugeführt wird.

20. Verfahren nach Anspruch 18 oder 19, wobei das Verhältnis des Auslasses (27) des äußeren Aufnahmebehälters zu dem Auslass (15) des inneren Vorratsbehälters (20) im Bereich von 10 bis 30 liegt.

21. Verfahren nach Anspruch 18, 19 oder 20, das das Abtasten von Fluid in dem äußeren Aufnahmebehälter umfasst.

22. Verfahren nach Anspruch 18, 19, 20 oder 21, das das Abtasten von Fluid in dem inneren Vorratsbehälter (20) umfasst.

**Revendications**

1. Appareil pour l'homogénéisation d'un fluide à plusieurs phases ;
le fluide comprenant au moins une première phase et une seconde phase comprenant une phase gazeuse et une phase liquide ;
l'appareil comprenant un réservoir interne (20) en communication fluidique avec un réceptacle externe (10) ;
le réservoir d'entrée (20) comprenant une entrée (12) pour le fluide à plusieurs phases, une sortie (15) ayant une surface transversale plus petite que le corps pour la sortie de la première phase et au moins une ouverture (21) vers le réceptacle externe pour la sortie de la seconde phase, l'ouverture étant espacée de la sortie de la première phase ;
dans lequel le réceptacle externe (10) a un conduit de sortie (26) ayant un col (25) qui entoure au moins partiellement la sortie (15) du réservoir interne.

2. Appareil selon la revendication 1, dans lequel le réservoir interne (20) comprend un récipient (20) de forme conique.

3. Appareil selon la revendication 1 ou 2, dans lequel la sortie (15) et le conduit (26) sont au fond de l'appareil, à l'usage, et dans lequel la première phase est une phase liquide et la seconde phase est gazeuse.

4. Appareil selon la revendication 1 ou 2, dans lequel la sortie (15) et le conduit (26) sont au sommet de l'appareil, à l'usage, et dans lequel la première phase est une phase gazeuse et la seconde phase est une phase liquide.

5. Appareil selon la revendication 2, 3 ou 4, dans lequel l'entrée de fluide à plusieurs phases (12) dans le réservoir interne (20) est orientée radialement par rapport au récipient (20) de forme conique.

6. Appareil selon l'une quelconque des revendications précédentes, dans lequel l'entrée de fluide à plusieurs phases (12) est espacée de la sortie (15) du réservoir interne.

7. Appareil selon l'une quelconque des revendications précédentes, dans lequel le rapport du diamètre (DG) du col (25) sur le diamètre (DL) de la sortie (15) du réservoir interne est supérieur à 2,5.

8. Appareil selon la revendication 7, dans lequel le rapport (DG/DL) est compris entre 5 et 60.

9. Appareil selon la revendication 8, dans lequel le rapport (DG/DL) est compris entre 10 et 30.

10. Appareil selon la revendication 9, dans lequel le rapport (DG/DL) est d'environ 15.

11. Appareil selon l'une quelconque des revendications précédentes, dans lequel le réservoir interne (20) comprend une pluralité d'ouvertures (21, 23) pour que le fluide passe du réservoir interne (20) dans le réceptacle externe (10).

12. Appareil selon la revendication 11, dans lequel au moins une ouverture (21) est à une extrémité du réservoir interne (20) opposée à la sortie (15) du réservoir interne.

13. Appareil selon la revendication 11 ou 12, dans lequel au moins une ouverture (23) est du côté du réservoir interne (20) entre les extrémités du réservoir interne (20).

14. Appareil selon la revendication 13, comprenant une pluralité d'ouvertures (23) du côté du réservoir interne (20).

15. Appareil selon l'une quelconque des revendications précédentes, dans lequel le col comprend un tube de Venturi (25) dans la sortie (27).

16. Appareil selon l'une quelconque des revendications précédentes, comprenant des moyens pour échantillonner le fluide dans le réceptacle externe (10).

17. Appareil selon l'une quelconque des revendications précédentes, comprenant des moyens pour échantillonner le fluide dans le réservoir interne (20).

18. Procédé pour homogénéiser un fluide à plusieurs phases comprenant les étapes consistant à :

amener un fluide à plusieurs phases par une entrée (12) jusqu'à un réservoir interne (20) qui est au moins partiellement entouré par un réceptacle externe (10) ;

permettre aux phases du fluide à plusieurs phases de se séparer au moins partiellement dans le réservoir interne (20) ; et

retirer un courant de sortie du fluide du réservoir interne (20) par une sortie (15) comprenant un tube de Venturi de sorte que le fluide est aspiré par le réceptacle externe dans le courant de sortie.

**19.** Procédé selon la revendication 18, dans lequel le réservoir interne (20) comprend un récipient de forme conique et le fluide à plusieurs phases est amené par l'entrée (12) radialement orienté par rapport au réservoir (20).

**20.** Procédé selon la revendication 18 ou 19, dans lequel le rapport de la sortie (27) du réceptacle externe sur la sortie (15) du réservoir interne (20) est agencé pour être compris entre 10 et 30.

**21.** Procédé selon la revendication 18, 19 ou 20, comprenant l'étape consistant à échantillonner le fluide dans le réceptacle externe.

**22.** Procédé selon la revendication 18, 19, 20 ou 21, comprenant l'étape consistant à échantillonner le fluide dans le réservoir interne (20).

Figure 1

FRAMO FLOW MIXER
TYPICAL CHARACTERISTIC

Figure 2

Figure 3

Figure 4

**REFERENCES CITED IN THE DESCRIPTION**

**Patent documents cited in the description**

- EP 0379319 A
- WO 9013859 A

- WO 2008061972 A